# FASCICULE DE BREVET EUROPEEN

(11) **EP 2 072 368 B1**
(45) Date de publication et mention de la délivrance du brevet: **27.06.2012**
(21) Numéro de dépôt: 08291164.5
(22) Date de dépôt: 10.12.2008
(51) Int. Cl.: B61F 5/30, F16F 1/387

(54) **Articulation alvéolée notamment pour bielle d'entraînement**
Gelenk mit Aussparungen, insbesondere für Pleuelstange
Articulation with cavities, in particular for a drive rod

(30) Priorité: 17.12.2007 FR 0708806
(43) Date de publication de la demande: 24.06.2009
(73) Titulaire: Hutchinson, 75008 Paris (FR)
(72) Inventeur: Pic, Pierre, 27150 Etrepagny (FR)
(74) Mandataire: Jacquard, Philippe Jean-Luc

(56) Documents cités:
- EP-A- 1 586 789
- DE-C1- 19 913 777
- JP-A- 2000 088 026
- JP-A- 2003 072 543

## Description

La présente invention a pour objet une articulation alvéolée notamment pour une bielle d'entraînement qui fait partie d'un dispositif d'entraînement caisse-bogie pour un train.

Une articulation alvéolée a pour but d'avoir des rigidités radiales très différentes suivant des axes de sollicitations perpendiculaires. L'écart de rigidité est en général réglé par la taille des alvéoles qui peuvent être traversantes ou non.

Dans l'application envisagée, l'articulation doit présenter d'une part dans une première direction une souplesse élevée pour assurer le confort et la filtration, ainsi qu'une fonction supplémentaire, à savoir une forte raideur pour des sollicitations radiales fortes, et d'autre part, une raideur élevée dans une deuxième direction perpendiculaire à la première.

La mise en oeuvre selon l'invention d'une articulation alvéolée à butée permet de réaliser cette fonction supplémentaire dans un volume réduit.

Le Brevet DE 199 13 777 décrit une telle articulation dans laquelle un effet de butée est obtenu par un contact entre une pièce de butée en élastomère qui n'est pas apte à un fonctionnement satisfaisant en présence de déformations coniques.

L'invention concerne aussi une articulation alvéolée comportant un axe central et un tube extérieur telle que défini dans la revendication 1.

Dans cette configuration, les bras en élastomère assurent la souplesse élevée dans la première direction, et la raideur élevée dans la deuxième direction, et les secteurs circulaires en caoutchouc servent à assurer la forte raideur désirée lorsque la butée vient en contact avec le tube extérieur. Cette mise en contact s'effectue par une pièce rigide, de préférence métallique, ce qui évite une usure rapide par abrasion.

Les pièces de butée présentant un profil convexe dirigé vers le tube extérieur, on évite un pincement localisé de l'élastomère à une extrémité longitudinale, ce qui serait le cas avec une pièce de butée cylindrique.

Le profil convexe présente un sommet situé au voisinage du milieu du tube extérieur.

De préférence, le profil convexe présente, en coupe longitudinale, une région de sommet arrondi avantageusement bordée de deux segments de droite inclinés d'un angle α, par rapport à l'axe du tube extérieur par exemple compris entre 5° et 12° et notamment égal à 10°.

La présence d'un sommet arrondi permet, lors d'un mouvement conique, que le point de contact entre la pièce de butée et le tube extérieur reste situé au voisinage du sommet, ce qui permet d'éviter une concentration de contraintes au niveau de la couche de caoutchouc.

Avantageusement, l'articulation est caractérisée en ce que l'axe central déborde longitudinalement de part et d'autre du tube externe de même que les pièces de butée.

De manière à éviter un gonflement de l'élastomère lorsque la butée est sous contrainte, les extrémités des secteurs cylindriques sont avantageusement concaves, par exemple pour former en coupe transversale des secteurs semi-circulaires.

Il est avantageux que les bords des bras en élastomère qui délimitent lesdits espaces soient concaves en coupe transversale.

L'axe central peut être équipé à ses extrémités d'éléments de montage sur un élément de structure d'un véhicule ferroviaire.

D'autres caractéristiques et avantages de l'invention apparaîtront mieux à la lecture de la description ci-après en liaison avec les dessins dans lesquels :
- les figures 1a à 1c sont respectivement une coupe transversale, une coupe longitudinale AA et une coupe AB d'une articulation selon un mode préféré de réalisation de l'invention,

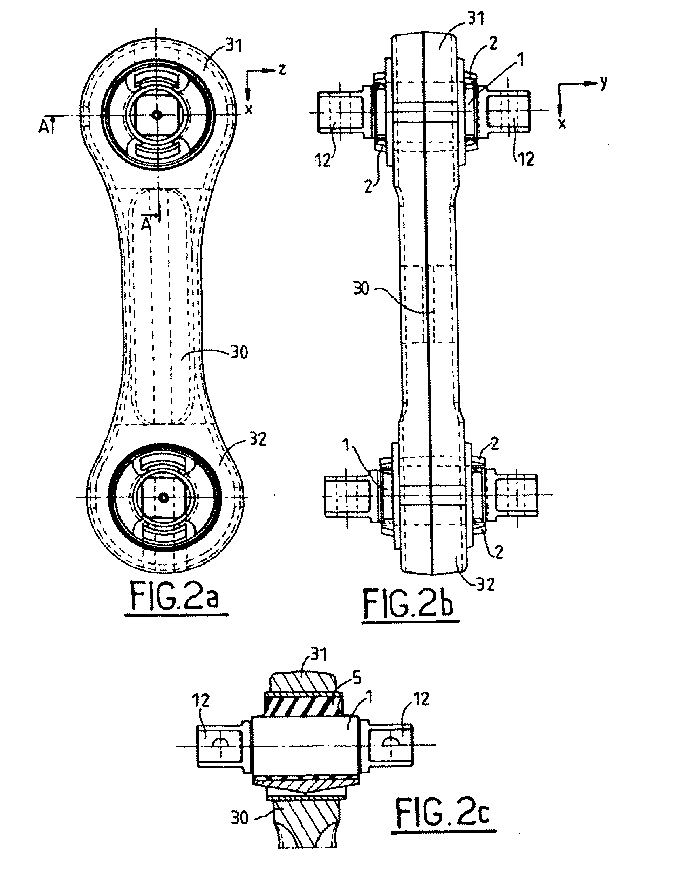

- les figures 2a, 2b et 2c sont respectivement une vue en plan, une vue latérale et une coupe AB d'une bielle pour dispositif d'entraînement caisse-bogie, équipée de deux articulations selon les figures 1a à 1c.

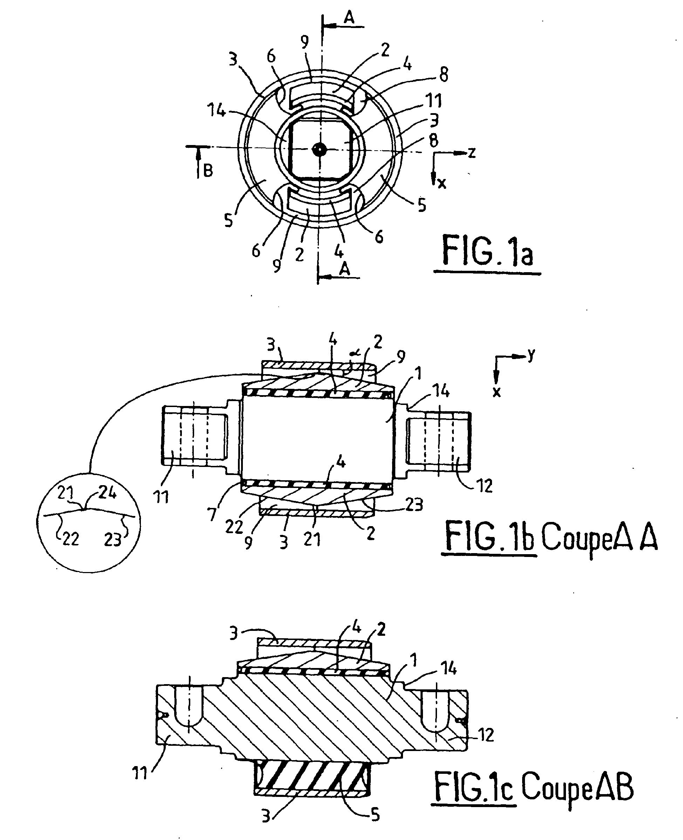

Selon les figures 1a à 1c, l'articulation alvéolée selon l'invention présente une pièce cylindrique 1 formant un axe qui présente à ses extrémités des raccords 11 et 12 de section carrée raccordés à l'axe 1 par un épaulement 14. Ces raccords 11 et 12 servent à fixer l'articulation à un bogie ou à une caisse d'un véhicule ferroviaire. Un tube cylindrique externe 3 coaxial à l'axe 1 (direction Y) est destiné à être logé dans la tête d'une bielle.

L'articulation alvéolée à butée (figures 1b et 1c) comporte deux bras 5 qui sont des secteurs cylindriques adhérisés à l'axe 1 et au tube 3. Ces deux bras se terminent de part et d'autre de leur plan de symétrie (parallèle à l'axe Z, qui dans l'application envisagée, est vertical) par des extrémités 6 concaves qui définissent deux espaces 8 qui constituent des secteurs cylindriques permettant de loger la butée.

La butée comporte un secteur cylindrique 4 en élastomère qui est adhérisé à l'axe 1 et à une pièce de butée 2 en métal qui, dans la position de repos représentée aux figures, est espacée par une région 9 du bord interne du tube externe 3, pour définir un jeu entre le sommet 24 de la région de sommet arrondie 21 de la pièce 2 et le contour interne du tube 3. Comme représenté en encadré agrandi de la figure 1b, la pièce 2 présente, en coupe longitudinale, une région de sommet 21 convexe ayant un sommet 24, cette région de sommet 21 étant bordée de deux segments de droite 22 et 23 faisant un angle α avec l'axe Y.

La direction transversale X est celle de déplacement du train, la direction longitudinale y de l'articulation est la direction transversale du train et l'axe z est la verticale.

L'articulation a pour fonction de présenter une rigidité radiale élevée dans la direction verticale Z (deuxième direction), et dans la direction X (première direction) une rigidité faible pour assurer le confort et la filtration des bruits, puis une forte raideur sous des sollicitations radiales fortes.

La rigidité élevée dans la direction Z et la faible rigidité dans la direction X est apportée par les bras en élastomère 5.

Le secteur cylindrique 4 en élastomère assure la fonction de raideur élevée qui est recherchée dans la direction X pour les fortes sollicitations.

On notera ici que, contrairement à des articulations alvéolées connues, où un même élément élastomère alvéolé assure les fonctions différentes dans les deux directions orthogonales, les butées 2 sont des éléments distincts des bras 5 et sont logées dans les alvéoles ou espaces 8 entre leurs extrémités 6.

Pour les faibles sollicitations de l'articulation dans la direction X de déplacement du véhicule ferroviaire, l'élasticité est donc obtenue par les bras 5.

Pour des charges plus élevées, dans la direction X, le jeu entre le sommet 24 et le tube 3 s'annule et la raideur est alors définie par les secteurs cylindriques 4.

Cet effet de butée s'accompagne d'un contact métal-métal résistant à l'usure entre la pièce 2 et le tube 3 et qui ne présente pas d'inconvénient pratique car le bruit d'accostage est amorti par les secteurs cylindriques en élastomère 4.

Pour permettre un fonctionnement avec des angles coniques, par exemple de 10°, sous sollicitation radiale dans la direction X, le contour externe de la pièce 2 est profilé de manière à présenter (en coupe longitudinale) un profil convexe avec une région de sommet arrondie 21 présentant un sommet 24 situé au milieu du tube 3 dans la direction Y, cette région 21 étant bordée par deux segments de droite 22 et 23.

L'angle α que font ces deux segments de droites 22 et 23 avec la direction Y déterminent la valeur maximale de l'angle conique.

Sous l'action d'une déformation conique, l'axe longitudinal de l'articulation ne reste pas parallèle à la direction Y, mais le point de contact entre la pièce de butée et l'intérieur du tube 3 reste localisé dans la région de sommet 21.

Ainsi, même sous de fortes charges et un angle conique élevé sous sollicitation radiale dans la direction X, la pièce 2 appuie sur le secteur cylindrique 4 au voisinage de son milieu ce qui évite une concentration des contraintes aux extrémités 7 des secteurs cylindriques 4 et une fatigue de l'élastomère qui les constitue. Lorsque l'angle maximal est atteint, on a un appui à plat sur un des segments de droite 22 ou 23 avec le tube 3, ce qui évite aussi une concentration de contraintes aux extrémités 7 des secteurs cylindriques 4.

Pour permettre une meilleure tenue en fatigue, la surface d'élastomère de la butée peut être augmentée, et à cet effet les secteurs cylindriques 4, ainsi que la pièce 2 et l'axe 1 dépassent longitudinalement de part et d'autre du tube 3

Pour limiter les gonflements de l'élastomère et augmenter la durée de vie, les extrémités 7 des secteurs circulaires 4 forment un ménisque concave par exemple semi-circulaire.

## Revendications

1. Articulation alvéolée comportant un axe central et un tube extérieur qui comporte :
- deux bras en élastomère (5) formant des secteurs cylindriques ayant un premier plan de symétrie et diamétralement opposés, adhérisés sur une partie du contour curviligne de l'axe central (1) et du tube extérieur (3) de sorte qu'ils sont séparés par deux espaces (8),
- deux butées qui sont logées dans lesdits espaces (8) et qui ont un deuxième plan de symétrie perpendiculaire au premier plan de symétrie, chaque butée comprenant un secteur cylindrique (4) en élastomère adhérisé à l'axe central, **caractérisée en ce que** chaque butée comprend une pièce de butée (2) en matériau rigide dont la face externe est espacée du tube extérieur (3) lorsque l'articulation est au repos, ledit secteur cylindrique (4) en élastomère étant adhérisé à la face interne de la pièce de butée (2), **en ce que**, en coupe longitudinale, les pièces de butée (2) en matériau rigide présentent un profil convexe dirigé vers le tube extérieur (3), et **en ce que** le profil convexe présente un sommet (24) situé au voisinage du milieu du tube extérieur (3).

2. Articulation selon la revendication 1, **caractérisé en ce que** le profil convexe présente en coupe longitudinale une région de sommet arrondie (21).

3. Articulation selon la revendication 2, **caractérisé en ce que** la région de sommet arrondie (21) est bordée de deux segments de droite (22, 23) inclinés d'un angle α avec l'axe du tube (3).

4. Articulation selon une des revendications 2 ou 3, **caractérisé en ce que** l'angle α est compris entre 5° et 12° et notamment égal à 10°.

5. Articulation selon une des revendications précédentes, **caractérisé en ce que** l'axe central (1) déborde longitudinalement de part et d'autre du tube externe (3) de même que les secteurs cylindriques (4) des butées et les pièces de butée (2).

6. Articulation selon une des revendications précédentes, **caractérisé en ce que** les extrémités (7) des secteurs cylindriques (4) des butées sont concaves.

7. Articulation selon la revendication 6, **caractérisé en ce que** les extrémités (7) des secteurs cylindriques (4) forment des ménisques concaves qui, en coupe transversales, sont sensiblement semi-circulaires.

8. Articulation selon une des revendications précédentes, **caractérisé en ce que** les bords (6) des bras en élastomère (5) qui délimitent lesdits espaces (8) sont concaves en coupe transversale.

9. Articulation selon une des revendications précédentes, **caractérisé en ce que** l'axe central (1) présente à ses deux extrémités des élements de montage (11, 12) sur un élément de structure d'un véhicule ferroviaire.

## Claims

1. A slotted joint comprising a central pin and an outer tube, the joint including:
two elastomer arms (5) forming diametrically opposite cylindrical sectors having a first plane of symmetry, which sectors are bonded on a portion of the central pin (1) having a curvilinear outline and a portion of the outer tube (3) so that they are separated by two spaces (8); and
two abutments that are housed in said spaces (8) and that present a second plane of symmetry perpendicular to the first plane of symmetry, each abutment comprising a cylindrical sector (4) of elastomer bonded to the central pin,
the joint being **characterized in that** each abutment comprises an abutment part (2) of rigid material with the outside face thereof being spaced apart from the outer tube (3) when the joint is at rest, said cylindrical sector (4) of elastomer being bonded to the inside face of the abutment part (2), **in that**, in longitudinal section, the abutment parts (2) of rigid material present a convex profile directed towards the outer tube (3), and **in that** the convex profile presents a top (24) situated in the vicinity of the middle of the outer tube (3).

2. A joint according to claim 1, **characterized in that** the convex profile presents, in longitudinal section, a rounded top region (21).

3. A joint according to claim 2, **characterized in that** the rounded top region (21) is bordered by two inclined straight line segments (22, 23) each making an angle α with the axis of the tube (3).

4. A joint according to claim 2 or claim 3, **characterized in that** the angle α lies in the range 5° to 12° and in particular is equal to 10°.

5. A joint according to any preceding claim, **characterized in that** the central pin (1) projects longitudinally from each end of the outer tube (3) as do the cylindrical sectors (3) of the abutments and the abutment parts (2).

6. A joint according to any preceding claim, **characterized in that** the ends (7) of the cylindrical sectors (4) of the abutments are concave.

7. A joint according to claim 6, **characterized in that** the ends (7) of the cylindrical sectors (4) form concave meniscuses that are substantially semicircular in cross-section.

8. A joint according to any preceding claim, **characterized in that** the edges (6) of the elastomer arms (5) that define said spaces (8) are concave in cross-section.

9. A joint according to any preceding claim, **characterized in that** the central pin (1) presents assembly elements (11, 12) at each of its two ends for assembly to a structural element of a rail vehicle.

## Patentansprüche

1. Gelenk mit Aussparungen, das eine Mittelachse und ein Außenrohr aufweist und aufweist:
zwei Arme (5) aus Elastomer, die Zylindersegmente bilden, die eine erste Symmetrieebene haben und diametral entgegengesetzt sind, die an einem Teil der krummlinigen Kontur der Mittelachse (1) und des Außenrohres (3) in der Art angebracht sind, dass diese durch zwei Räume (8) getrennt sind,
zwei Anschläge, die in den Räumen (8) untergebracht sind und die eine zweite Symmetrieebene senkrecht zur ersten Symmetrieebene haben, wobei jeder Anschlag ein Zylindersegment (4) aus Elastomer, das an der Mittelachse angebracht ist, aufweist, **dadurch gekennzeichnet, dass** jeder Anschlag ein Anschlagstück (2) aus starrem Material aufweist, dessen Außenfläche von dem Außenrohr (3) beabstandet ist, wenn sich das Gelenk in Ruhe befindet, wobei das Zylindersegment (4) aus Elastomer an der Innenfläche des Anschlagstücks (2) angebracht ist, dass im Längsschnitt die Anschlagstücke (2) aus starrem Material ein konvexes Profil aufweisen, das zum Außenrohr (3) gerichtet ist, und dass das konvexe Profil einen höchsten Punkt (24) aufweist, der sich benachbart zur Mitte des Außenrohrs (3) befindet.

2. Gelenk nach Anspruch 1, **dadurch gekennzeichnet, dass** das konvexe Profil im Längsschnitt einen abgerundeten Bereich (21) des höchsten Punktes aufweist.

3. Gelenk nach Anspruch 2, **dadurch gekennzeichnet, dass** der abgerundete Bereich (21) des höchsten Punktes von zwei Geradensegmenten (22, 23) umgeben ist, die in Bezug auf die Achse des Rohres (3) mit einem Winkel α geneigt sind.

4. Gelenk nach einem der Ansprüche 2 und 3, **dadurch gekennzeichnet, dass** der Winkel α zwischen 5° und 12° und insbesondere gleich 10° ist.

5. Gelenk nach einem der vorhergehenden Ansprüche, **dadurch gekennzeichnet, dass** die Mittelachse (1) in Längsrichtung auf beiden Seiten aus dem Außenrohr (3) hinausragt ebenso wie die Zylindersegmente (4) der Anschläge und die Anschlagstücke (2)

6. Gelenk nach einem der vorhergehenden Ansprüche, **dadurch gekennzeichnet, dass** die Endabschnitte (7) der Zylindersegmente (4) der Anschläge konkav sind.

7. Gelenk nach Anspruch 6, **dadurch gekennzeichnet, dass** die Endabschnitte (7) der Zylindersegmente (4) konkave Menisken bilden, die im Querschnitt im Wesentlichen hablkreisförmig sind.

8. Gelenk nach einem der vorhergehenden Ansprüche, **dadurch gekennzeichnet, dass** die Kanten (6) der Arme (5) aus Elastomer, die die Räume (8) begrenzen, im Querschnitt konkav sind.

9. Gelenk nach einem der vorhergehenden Ansprüche, **dadurch gekennzeichnet, dass** die Mittelachse (1) an ihren zwei Endabschnitten Montageelemente (11, 12) in Bezug auf ein Strukturelement eines Schienenfahrzeugs aufweist.
